(19)

Europäisches
Patentamt
European
Patent Office
Office européen
des brevets

(11) **EP 2 355 516 A1**

(12) **EUROPEAN PATENT APPLICATION**
published in accordance with Art. 153(4) EPC

(43) Date of publication:
    **10.08.2011 Bulletin 2011/32**

(21) Application number: **09830336.5**

(22) Date of filing: **26.11.2009**

(51) Int Cl.:
    **H04N 7/30** (2006.01)          **H04N 1/41** (2006.01)

(86) International application number:
    **PCT/JP2009/069938**

(87) International publication number:
    **WO 2010/064569 (10.06.2010 Gazette 2010/23)**

(84) Designated Contracting States:
    **AT BE BG CH CY CZ DE DK EE ES FI FR GB GR
    HR HU IE IS IT LI LT LU LV MC MK MT NL NO PL
    PT RO SE SI SK SM TR**

(30) Priority: **02.12.2008 JP 2008307608**

(71) Applicant: **Sumitomo Electric Industries, Ltd.
    Chuo-ku
    Osaka-shi
    Osaka 541-0041 (JP)**

(72) Inventors:
    • **FUJITA Yasuhito**
      **Yokohama-shi**
      **Kanagawa 244-8588 (JP)**

    • **KAKII Toshiaki**
      **Yokohama-shi**
      **Kanagawa 244-8588 (JP)**
    • **HATA Yoichi**
      **Yokohama-shi**
      **Kanagawa 244-8588 (JP)**
    • **GOTO Yoshimitsu**
      **Yokohama-shi**
      **Kanagawa 244-8588 (JP)**

(74) Representative: **Cross, Rupert Edward Blount
    Boult Wade Tennant
    Verulam Gardens
    70 Gray's Inn Road
    GB-London WC1X 8BT (GB)**

(54) **MOVING IMAGE DATA COMPRESSING METHOD**

(57) The present invention relates to a moving image data compressing method that enables improvement of the efficiency of compressing moving images and reduction in the processing load due to JPEG 2000 system. In the compressing method, in sequentially compressing, according to JPEG 2000, image frames that are disposed along a time axis without compressing the image frames in the time axis direction, a process of detecting movement of image elements is performed prior to EBCOT, with one or more code blocks, each of which being a minimum processing unit of the EBCOT, as one detection unit. While EBCOT is performed for each of code blocks that constitute a detection unit on which movement has been detected, EBCOT is skipped and predetermined data is supplemented for each of code blocks that constitute a detection unit on which movement has not been detected. Thus, the number of times of processing by EBCOT with a large computation amount can be reduced.

**Fig.5**

## Description

## Technical Field

The present invention relates to a technology for improving JPEG 2000 system, which is in recent years widely used as a compression technology for moving image data that are frequently transmitted and received via a data communication line, such as the Internet, and particularly relates to a moving image data compressing method, for effectively reducing the processing load in coding and decoding for image frames that constitute moving image data.

## Background Art

In recent years, the communication speed on a data communication line is becoming exponentially increasing. Also between individually owned information terminals, such as personal computers (hereinafter, referred to as a PC/PCs), transmitting and receiving of large volume visual information including moving image data, audio data, etc has come to be performed everyday. However, in case of practically distributing huge moving image data, using a limited network resource, it is necessary to reduce the data amount itself due to limits, such as the processing capacity of individual terminals, the line speed of a network, and the like. In such a situation, technologies for compression of moving image data and audio data to be distributed have been actively researched, and brought into practical use.

In particular, as a technology for compressing moving image data, H. 264 (MPEG-4 AVC, hereinafter merely referred to as the MPEG system, including such next generation image compression technologies), which has been brought into practical use, is prevailing. Further, a Motion-JPEG 2000 system (hereinafter, merely referred to as the JPEG 2000 system) in which each image frame is compressed, according to JPEG 2000 standard known as a still image compressing method, as disclosed by Patent Document 1, has also become rapidly prevalent.

A moving image compressing technology, such as the MPEG system, can change the number of frames in a certain time at an information terminal on the transmission side, however, upon transmission, during when processing is possible, of frames in response to a request by an information terminal on the receiving side, for example, a delay is caused for the time from changing the number of frames to transmitting the frames, which makes real time processing impossible. On the other hand, a moving image compressing technology by the JPEG 2000 system is a moving image data compressing technology for moving image data of image frames that are disposed along a time axis without being compressed in the time axis direction and are individually compressed and decompressed. This technology uses the difference information between adjacent image frames. Thus, this technology is definitely distinguished from the above-described MPEG system and the like that performs compression also in the time axis direction.

The JPEG 2000 system, as described above, has a low compression efficiency for the same bit rate, as compared with the MPEG system, because compression is not performed in the time axis direction, however, the JPEG 2000 system has features, such as to enable individual editing of an arbitrary image frame, by separating the image frame from other image frames. Further, the load during coding and decoding at each information terminal is small, enabling real time encoding with comparatively simple equipment. Accordingly, a video capture cards for individual use or the like is employed as an output format.

## Citation List

## Patent Document

Patent Document 1: Japanese Patent Application Laid-Open No. 2008-011408

## Disclosure of the Invention

## Problems that the Invention is to Solve

The present inventors have examined conventional moving image compressing technologies, particularly the JPEG 2000 system, and as a result, have discovered the following problems.

That is, in sequentially compressing image frames that constitute moving image data as in the conventional JPEG 2000 system, according to the JPEG 2000 standard, it is necessary to compress all the moving image data for each image frame, which causes a problem of a low compression efficiency. Further, in a moving image compressing process by the JPEG 2000 system, EBCOT, which is an entropy coding process, is performed. As EBCOT requires an extremely large computation amount, it applies a significant processing load to certain information processing equipment, such as a personal computer.

The present invention has been developed to eliminate the problems described above. It is an object of the present invention to provide a moving image compressing method that improves the compression efficiency of moving image data and is effective for reduction in the processing load, due to the JPEG 2000 system, by performing a movement detection process in a moving image compressing process by the JPEG 2000 system, using data after wavelet transform, prior to EBCOT with a large computation amount.

## Means for Solving the Problems

A moving image data compressing method according to the present invention relates to technology and processing of compression by the JPEG 2000 system, which is a technology for compression of moving image data constituted by image frames that are disposed along a time axis without being compressed in the time axis direction and are individually compressed and decompressed according to the JPEG 2000 standard. In the moving image data compressing method according to the present invention, computation performed for each image frame basically includes processes of color space transform (including DC level shift and component transform), wavelet transform, scalar quantization, and EBCOT.

Particularly, in the moving image data compressing method according to the present invention, a movement detection process is performed by comparison between wavelet transform data of image frames adjacent to each other along the time axis, prior to EBCOT, which is a processing algorithm for entropy coding and requires a large computation amount.

Specifically, in a moving image data compressing method according to the present invention, as a compressing process of image frame to be processed among image frames that constitute moving image data, a movement detection process of image elements and data supplement are performed prior to EBCOT.

The movement detection process that is performed prior to EBCOT detects the presence or absence of movement of image elements with one or more code blocks, each of which is the minimum process unit of EBCOT, as one detection unit, and comparing data after wavelet transform of an image frame to be processed, with data after wavelet transform of an image frame compressed immediately before.

Based on a result (detection result) of the detection movement process, EBCOT or data supplement is performed. That is, EBCOT is performed on respective code blocks which constitute a detection unit having moved. On the other hand, EBCOT is skipped for respective code blocks which constitute a detection unit having not moved, and instead, data after EBCOT process of an image frame compressed immediately before or index data (skip data) that suggests skip operation is assigned.

In the moving image data compressing method according to the present invention, the movement detection process performed prior to EBCOT is executed at a timing before or after quantization performed prior to EBCOT. In other words, the movement detection process is performed after wavelet transform and before quantization, or after quantization and before EBCOT.

Further, in the moving image data compressing method according to the present invention, in order to improve the efficiency (shortening the processing time) of the movement detection process, it is preferable that a detection result of the movement detection process is shared among a plurality of sub-bands obtained by spatially dividing, through wavelet transform, an image frame to be processed into a plurality of kinds of frequency bands. Such information sharing is possible because position information is saved among the plurality of sub-bands obtained through the wavelet transform. That is, regarding the movement detection process on the respective plurality of sub-bands, first, the movement detection process is performed on the sub-band with the lowest frequency component for each detection unit, and a result of the movement detection process on the sub-band with the lowest frequency component is also applied to the other sub-bands. Specifically, a detection result identical to that of each of the code blocks, which constitute the detection unit, is applied to the code block that represents an image area identical to that of each of the code blocks that constitute the detection unit, in each of the other sub-bands. By having a detection result of the movement detection process shared among the respective sub-bands, it is possible to significantly shorten the processing time required by the movement detection process.

The present invention will be more fully understood from the detailed description given hereinbelow and the accompanying drawings, which are given by way of illustration only and are not to be considered as limiting the present invention.

Further scope of applicability of the present invention will become apparent from the detailed description given hereinafter. However, it should be understood that the detailed description and specific examples, while indicating preferred embodiments of the invention, are given by way of illustration only, since various changes and modifications within the scope of the invention will be apparent to those skilled in the art from this detailed description.

## Effects of the Invention

By the moving image data compressing method according to the present invention, in a moving image compressing process by the JPEG 2000 system, presence or absence of movement of image elements can be detected (a movement detection process) by comparison of wavelet transform data between image frames adjacent to each other prior to EBCOT with a large amount of computation. Based on a detection result of the movement detection process, it is determined whether or not to skip code blocks, which are a minimum processing unit, in EBCOT. Thus, it is possible to improve the compression efficiency and accordingly reduce the processing load.

Further, a detection result of the movement detection process is shared among plural sub-bands obtained by spatially dividing, through wavelet transform, an image frame to be processed into plural kinds of frequency bands, and it is thereby possible to improve the efficiency of the movement detection process.

## Brief Description of the Drawings

Fig. 1A shows a view for explaining the configuration of a communication system that enables transmitting/receiving of moving image data, and the configuration of a PC capable of executing a moving image data compressing method according to the present invention;

Fig. 2 shows views for explaining the structure of moving image data according to the JPEG 2000 standard;

Fig. 3 shows processing flows for specifically explaining the moving image data compressing method of image data according to the JPEG 2000 standard;

Fig. 4 is a view showing sub-bands at decomposition level 2 generated by wavelet transform;

Fig. 5 shows a processing flow for explaining a first embodiment of a moving image data compressing method according to the present invention;

Fig. 6 shows processing flows for explaining a second embodiment of a moving image data compressing method according to the present invention; and

Fig. 7 shows a view for explaining an example of application of a movement detection process in a moving image data compressing method according to the present invention.

**Best Modes for Carrying Out the Invention**

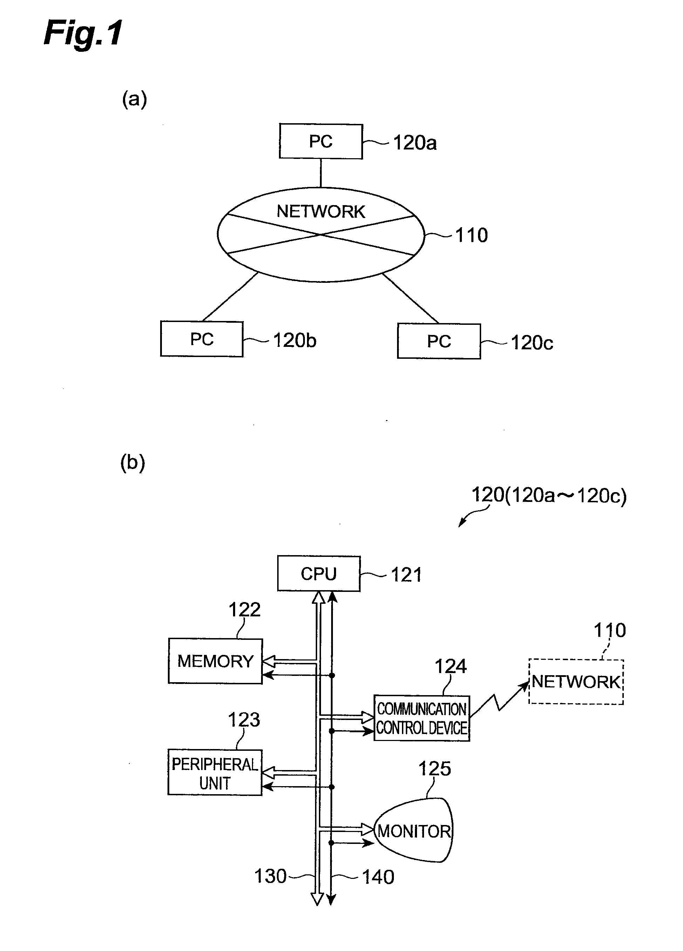

In the following, embodiments of a moving image data compressing method according to the present invention will be explained in detail, referring to Figs. 1 to 7. In the description of the drawings, identical or corresponding components are designated by the same reference numerals, and overlapping description is omitted.

Transmitting and receiving of moving image data between a plurality of information processing devices can be realized by a communication system configured, for example, as shown in Fig. 1(a). Such a communication system is configured with a network 110 including a plurality of kinds of data communication lines regardless of being wired or wireless, and PCs 120a to 120c, which are a plurality of information processing devices connected with the network 110. Particularly, each of the PCs 120 (corresponding to PCs 120a to 120c in Fig. 1(a)) is, as shown in Fig. 1(b), includes a CPU 121 for various computations and controls, a memory 122 that arbitrarily stores a computer program for execution of a moving image data compressing method according to the present invention, moving image data, and interim data in computation and also provides a desired computation space, peripheral units 123 such as a keyboard and pointing device, a communication control device 124 for enabling data transmitting and receiving to/from other PCs via the network 110, and a monitor 125 for displaying moving image data and the like. These hardware resources 121 to 125 are organically connected via a data bus 130 and a control bus 140, and the moving image data compressing method according to the invention is executed by collaboration between these hardware resources 121 to 125. Specifically, the CPU 121 reads out, from the memory 122, the computer program for execution of the moving image data compressing method according to the present invention, and executes the read out of computer program to thereby carry out the respective embodiments according to the invention described below.

First, a movement detection process by the JPEG 2000 system, which is a basic technology for the moving image data compressing method according to the present invention, will be described.

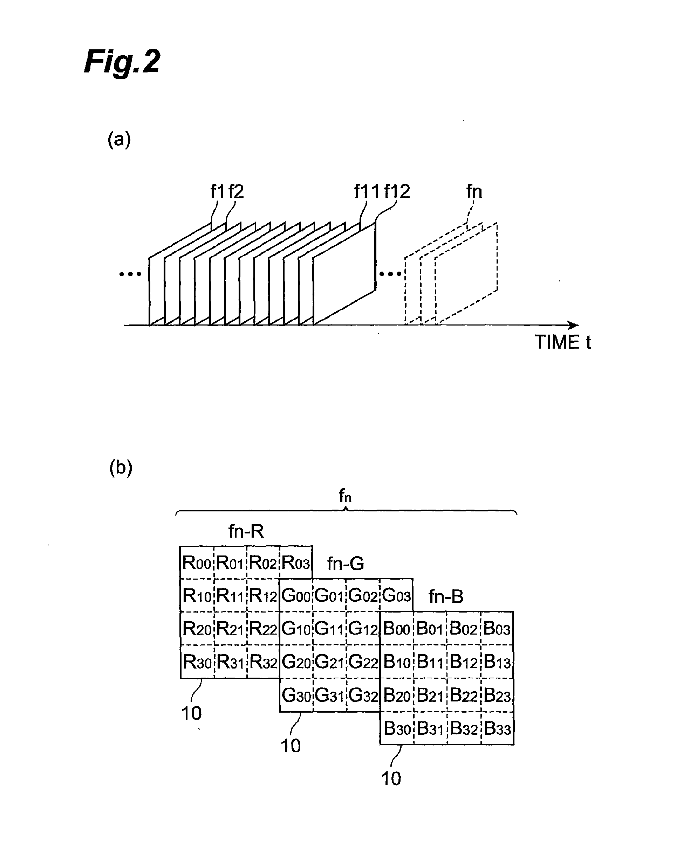

Moving image data to be an object of the JPEG 2000 system are, as shown in Fig. 2(a), disposed along a time axis t without being compressed in the direction of the time axis t, and constituted with image frames $f_n$ (n=1, 1, ...) which are individually compressed and decompressed.

In case that respective image frames are color images, respective components $f_n$-R, $f_n$-G, and $f_n$-B (herein, an RGB primary color system) of original image frames are, in general, divided into rectangular regions 10, as shown in Fig. 2(b). In the JPEG 2000 standard, these divided rectangular regions 10 are referred to as tiles. In the example, shown in Fig. 2(b), the respective components $f_n$-R, $f_n$-G, and $f_n$-B are divided into vertically/horizontally 4x4, totally 10, rectangular tiles 10. Each of these tiles 10 (in Fig. 2(b), $R_{00}$, $R_{01}$, ..., $R_{33}$/ $G_{00}$. $G_{01}$, ..., $G_{33}$/ $B_{00}$, $B_{01}$, ..., $B_{33}$) is a basic unit in compression/decompression processing of image frames $f_n$. Accordingly, the compression/decompression process of the respective image frames $f_n$ is performed for each of the components $f_n$-R, $f_n$-G, and $f_n$-B, or individually for each of the tiles 10 of the respective components.

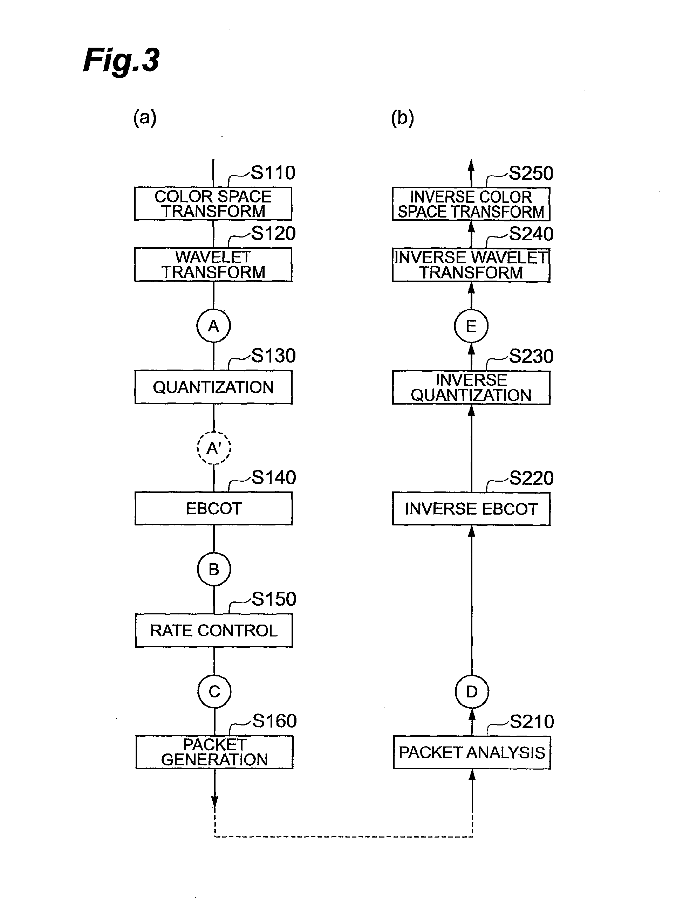

Fig. 3 shows processing flows for specifically explaining the moving image compressing/decompressing process based on the JPEG 2000 system. Particularly, Fig. 3(a) is a coding process flow based on the JPEG 2000 system, and Fig. 3(b) is a decoding process flow based on JPEG 2000 system.

After color space transform S110 including DC level shift and component transform, as described above, is performed, as a compression process (including coding) according to the JPEG 2000 system, discrete wavelet transform S120, scalar quantization S130, and coding by EBCOT: S140 are sequentially performed, as shown in Fig. 3(a). In reverse, in a decompression process of coded data (including decoding), decoding S220 by inverse EBCOT, inverse scalar quantization S230, inverse discrete wavelet transform S240, and inverse color space transform S250 are sequentially performed, as shown in Fig. 3(b). In the following, as the decompression process is performed simply in a procedure inverse to the compression process, only the compression process will be described in detail.

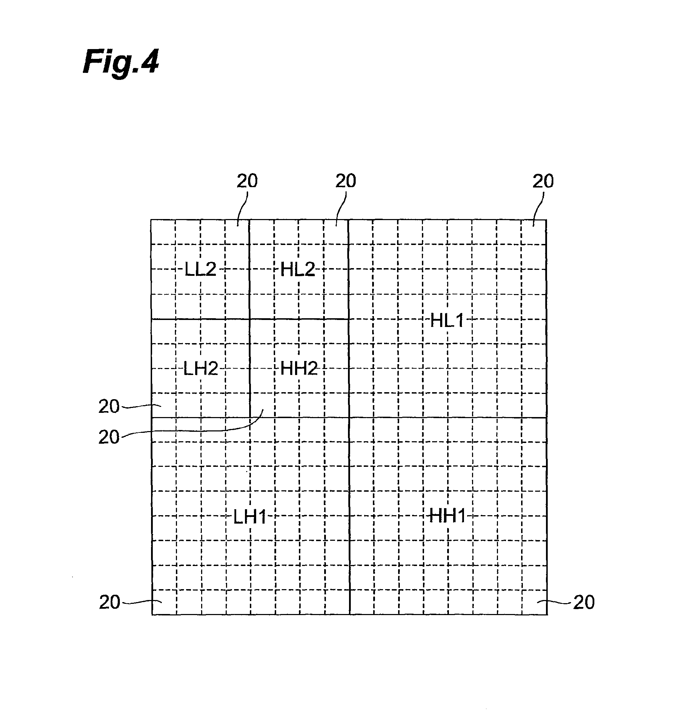

First, as shown in Fig. 3(a), after the color space transform S110 including DC level shift and component transform of an image frame $f_n$ that constitutes moving

image data is performed, the image frame $f_n$ is spatially divided into a plurality of decomposition levels by the wavelet transform S120. The respective decomposition levels are formed by a plurality of sub-bands (LL, HL, LH, HH), and the low frequency component (LL) is recursively divided. The respective sub-band coefficients represent the horizontal and vertical frequency characteristics at the respective decomposition levels. Fig. 4 is a view showing the sub-bands at the decomposition level 2 generated by the wavelet transform S120. The respective sub-bands are constituted by code blocks 20 each of which is the minimum processing unit of entropy coding by EBCOT: S 140.

Herein, the wavelet transform S120 refers to discrete wavelet transform (DWT) in the JPEG 2000 standard, and DWT based on the lifting structure of a two-channel filter bank is adopted. There are two kinds of DWT based on the lifting structure, namely, integer type DWT, which is invertible transform, and real type DWT, which is non-invertible transform. The real type DWT is used for lossy (non-invertible) coding, and the integer type DWT is used for lossless (invertible) coding.

Subsequently, the scalar quantization S130 performs scalar quantization of the DWT coefficient for each sub-band. However, the process is omitted in case of using the integer type DWT. The step size of quantization for the scalar quantization is represented as follows.

$$\Delta_b = 2^{R_b - \varepsilon_b} \left(1 + \frac{\mu_b}{2^{11}}\right)$$

Herein, $\Delta_b$ represents the quantization step of the sub-band b, and $R_b$ represents the dynamic range of the sub-band b. $E_b$ and $\mu_b$ are respectively expressed by 5 bits and 11 bits, and transmitted to a decoder for the inverse quantization S230. The above-described quantization step size has a high image quality priority. That is, a small step size is set tor a tile 10 for which a high image quality is desired, and a small step size is set for a tile 10 to which a low image quality is applicable. Setting the quantization step size to 1 is virtually equivalent to not performing scalar quantization.

Then, EBCOT (Embedded Block Coding with Optimized Truncation): S140 is an algorithm that takes the role of processing corresponding to entropy coding, and is formed by two processes which are coefficient bit modeling and arithmetic coding. EBCOT: S140 is performed on minimum coding processing units called code blocks 20. Code blocks 20 are defined by a rectangular region in a DWT region, and have the same size commonly to all sub-bands. Further, among the above-described three processes, the processes excluding the arithmetic coding are independently performed for each unit of the code block size.

In the coefficient bit modeling, coefficients in code blocks are subjected to bit plane decomposition, and the contexts of coefficient bits in respective bit planes are determined. In the determination of the contexts, context assignment maps based on a prepared statistic model are prepared. The context assignment maps are different depending on the band. According to the context of the coefficient bit, a single bit plane is divided and arranged into three coding passes (sub-bit planes).

Then, the arithmetic coding codes the respective coding passes, using an MQ coder, which is a binary arithmetic coder. Context is necessary for the MQ coder, and the context obtained by the coefficient bit modeling is used.

When EBCOT: S140 is completed, the rate control S150 is subsequently preformed. The rate control S150 is arranged by layer dividing and code truncation. In the layer dividing and the code truncation, coded data arrays generated for the respective code blocks are divided onto plural SNR layers in a given coding rate, depending on the degree of contribution to improvement of SNR in a reproduced image frame. The uppermost layer affects the image quality the most, and by receiving the respective layers in the order from the uppermost to the lowermost, the image quality of the reproduced image frame can be improved in stages. Positions that enable layer dividing are limited to the respective ends of the coding passes, and these ends are called truncation points. Rate control in the JPEG 2000 standard can be attained by cutting off data that exceeds the given coding rate with a unit of a truncation point, from the data re-arrayed in the order of higher contribution to the image quality.

As described above, a portion of coded data is cut off by the rate control S150 for matching with a target coding amount, and after adding a header and through packet generation S160, moving image coded data subjected to a compression process by the JPEG 2000 system is generated.

As shown in Fig. 3(b), in the decompression process of coded data, packet analysis S210 is performed, and the coded data recorded in the obtained packet is extracted. The extracted coded data is subjected to EBCOT: S120 as the decoding process, and then subjected to the inverse scalar quantization S230, the inverse discrete wavelet transform S240, and the inverse color space transform S250 including DC level inverse shift and inverse component transform. Thus, image frame is reproduced.

(First Embodiment)

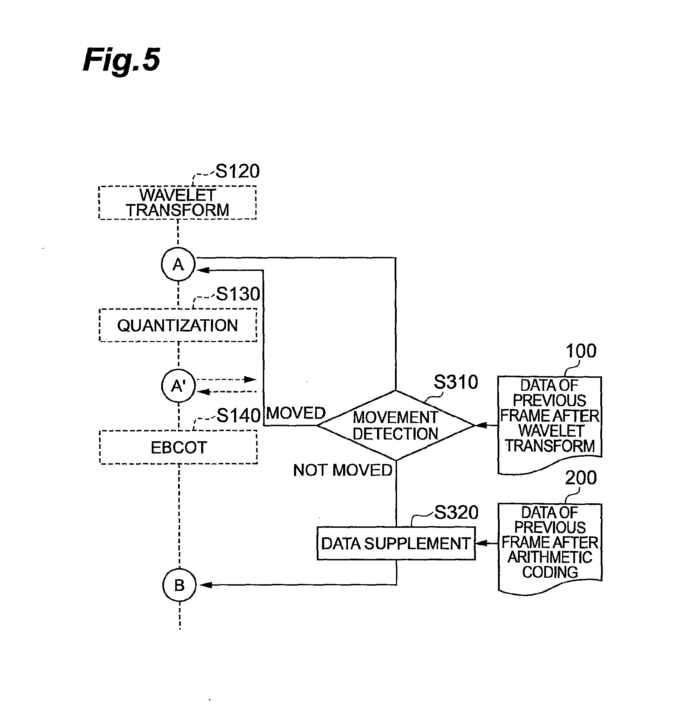

A first embodiment of a moving image data compression method according to the invention, based on a moving image compression process by the above-described JPEG 2000 system will be described below in detail, referring to Fig. 5. Fig. 5 shows a processing flow for explaining the first embodiment of a moving image data compressing method according to the present in-

vention. The moving image data compressing method is executed by the CPU 121 shown in Fig. 1(b). Further, moving image data to be processed and interim data generated in the computation process are sequentially stored in the memory 122, and handled between the memory 122 and the CPU 121 via the data bus 130.

In the moving image data compressing method in the first embodiment, prior to EBCOT: S140, a movement detection process S310 (described as 'movement detection' in Fig. 5) is performed before or after the scalar quantization S130. That is, the movement detection process S310 is performed at a branch point A or A'.

First, in the movement detection process S310, one or more code blocks 20 is/are set as a detection unit. Specifically, data after wavelet transform of an image frame $f_n$ to be processed is compared with data 100 after wavelet transform of an image frame $f_{n-1}$ (previous frame) having been subjected to compression processing immediately before.

As a result of the above-described movement detection process S310, if the data compared with each other are different, the subsequent coding process EBCOT: S140 is performed on the respective code blocks 20 which constitute a detection unit. On the other hand, if the data compared with each other agree with each other (or substantially agree with each other), EBCOT: S140 is skipped for the respective code blocks 20 which constitute a detection unit, and the process is proceeded to the branch point B after data supplement S320 is performed (the process after completion of EBCOT: S140).

In the data supplement S320 in the first embodiment, data 200 of the immediately previous image frame after being subjected to arithmetic computation is assigned to the respective code blocks 20 which constitute the detection unit on which movement of pixel elements has not been detected.

(Second Embodiment)

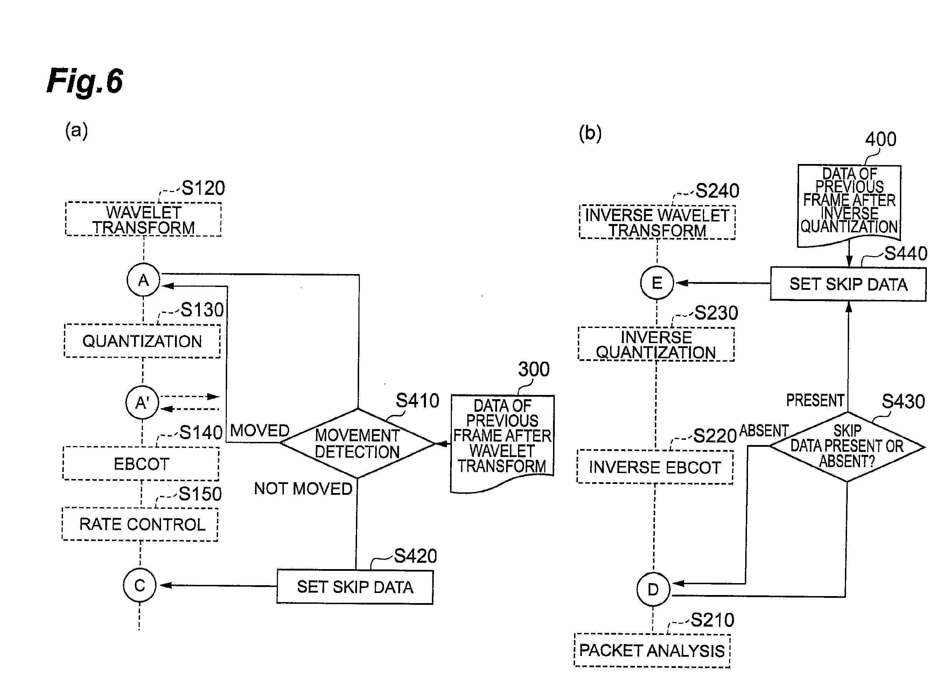

In the first embodiment, data 200 after arithmetic computation on the immediately previous image frame has been used as data for data supplement, however, index data (skip data) suggesting that EBCOT: S140 has been skipped in the compression process of the image frame $f_n$ may be used. In a second embodiment, arrangement is made such that actual data supplement can be performed in the decompression process of coded data, referring to skip data that has been assigned to the objective code blocks 20 in the compression process of the image frame $f_n$. Fig. 6 shows a processing flow for explaining the second embodiment of the moving image data compressing method according to the present invention. The process is executed by the CPU 121, shown in Fig. 1(b). Moving image data as an object of processing and interim data generated in the computation process are sequentially stored in the memory 122 and handled between the memory 122 and the CPU 121 via the data bus 130.

Also in the moving image data compressing method in the second embodiment, prior to EBCOT: S140 similarly to the first embodiment, a movement detection process S410 is performed before or after the scalar quantization S130. That is, as shown in Fig. 6(a), a movement detection process S410 (described as 'movement detection' in Fig. 6(a)) is performed at a branch point A or A'.

In the movement detection process S410, one or more code blocks 20 is/are set as one detection unit. Specifically, data after wavelet transform of an image frame $f_n$ to be processed is compared for each detection unit, with data 300 after wavelet transform of an image frame $f_{n-1}$ (previous frame) having been subjected to compression processing immediately before.

As a result of the movement detection process S410, if the data compared with each other are different, the subsequent coding process EBCOT: S140 is performed on the respective code blocks 20 which constitute the detection unit. On the other hand, if the data compared with each other agree with each other (or substantially agree with each other), EBCOT: S140 is skipped for the respective code blocks 20 which constitute the detection unit, and the process is proceeded to the branch point C after data supplement S420 is performed (the process after completion of EBCOT: S150). In the data supplement S420 in the second embodiment, skip data, as index data suggesting that EBCOT: S140 has been skipped, is assigned to the respective code blocks 20 which constitute the detection unit on which movement of pixel elements has not been detected.

On the other hand, as shown in Fig. 6(b), in the decompression process of coded data, packet analysis S210 is performed, and the coded data recorded in the obtained packet is subjected to skipped data confirmation S430 at a branch point D. If there is no skip data, the process is proceeded to inverse EBCOT: S220 from the branch point D as normally. On the other hand, if skip data has been assigned to extracted coded data, inverse EBCOT: S220 and inverse quantization S230 are skipped, and in data supplement S440, data 400 after inverse quantization, which has been performed on the immediately previous image frame, is assigned to the coded data 20 assigned with the skip data, and then the process is returned to a branch point E.

The timing of actually executing the data supplement process S440 can be, for example, after the inverse quantization S230 (branch point E), as described above, however, the data supplement S440 may be performed at another timing as long as the stored data of the immediately previous image frame is in an appropriate stage for reproduction. Further, the above-described compression process and the decompression process may be performed on different PCs or on the same PC.

(Example of Application of Movement Detection Process)

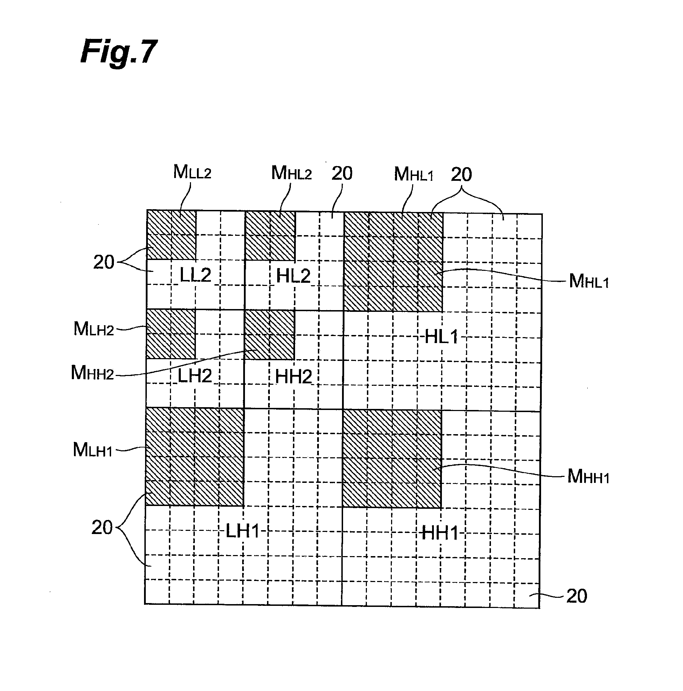

Although, as described above, the moving image data compressing method in the first or the second embodiment, the movement detection process S310, S410 is performed prior to EBCOT: S140, a moving image data compressing method according to the present invention also enables a more efficient movement detection process then. Fig. 7 shows a view for explaining an example of application of a movement detection process in a moving image data compressing method according to the present invention.

That is, for efficiency (reduction in the processing time) of the above-described movement detection process S310, S410, a detection result of the movement detection process is shared between plural sub-bands obtained by spatial dividing of an image frame $f_n$ to be processed into plural kinds of frequency bands. Such sharing of information is possible because position information is stored among plural sub-bands obtained by the wavelet transform S120.

Specifically, as shown in Fig. 7, in the movement detection process S310, S410 of plural sub-bands (LL2, HL2, LH2, HH2, HL1, LH1 and HH1), when the movement detection process has been performed on a detection unit, which constitutes the sub-band LL2 with the lowest frequency component and is constituted by code blocks 20 that are a minimum processing unit for EBCOT: S140, a detection result identical to that of each of the code blocks which constitute the detection unit is applied to each of the code blocks that represent an image area identical to that represented by each of the code blocks (the code blocks of the sub-band LL2 with the lowest frequency component) that constitute the detection unit, in each of the other sub-bands. For example, when the movement detection process has been performed, having code blocks included in an image area $M_{LL2}$ in the sub-band LL2 be a detection unit, the same detection result is applied also to the same image areas $M_{HL2}$, $M_{LH2}$, $M_{HH2}$, $M_{HL1}$, $M_{LH1}$, $M_{HH1}$ in the other sub-bands HL2, LH2, HH2, HL1, LH1, HH1.

Regarding the method for specifying the same image area, in each of other sub-bands at the same decomposition level (Assuming that the sub-band LL2 is the reference, the sub-bands at the same decomposition level are HL2, LH2, and HH2.), the area at the same position and with the same size as those of the comparison object is the same image area. Further, in each of sub-bands at a decomposition level higher by one step (Assuming that the sub-band HH1 is the reference, the sub-bands at the decomposition level higher by one step are LL2, HL2, LH2, and HH2.), the position and the size become 1/2 times in the area. In each of sub-bands at a decomposition level lower by one step (Assuming that the sub-band LL2 is the reference, the sub-bands at the decomposition level lower by one step are HL1, LH1, and HH1), the position and the size become two times in the area.

By having a detection result of a detection process shared between respective sub-bands in such a manner, the processing time required for the movement detection process can be greatly shortened. Further, the reference for determining whether data is the same in the comparison process depends on the required video image quality, and there may be a case that the data is considered to be the same if similarity to a certain extent or more exists.

From the invention thus described, it will be obvious that the embodiments of the invention may be varied in many ways. Such variations are not to be regarded as a departure from the spirit and scope of the invention, and all such modifications as would be obvious to one skilled in the art are intended for inclusion within the scope of the following claims.

**Reference Signs List**

10...tile; 20...code block; $f_n$ (n=1, 2, ...)...image frame; $f_n$-R, $f_n$-G, $f_n$-B...component; 110...network; and 120, 10a-120c... PC.

**Claims**

1.  A moving image data compressing method that sequentially compresses image frames disposed along a time axis without compressing the image frames in the time axis direction, according to JPEG 2000 standard, wherein the method compresses image frames by sequentially performing color space transform, wavelet transform, quantization, and EBCOT on each of the image frames, the method comprising, as a process of compressing image frames to be processed among image frames that constitute the moving image data, the steps of:

    prior to the EBCOT, detecting presence or absence of movement of an image element by comparing data after wavelet transform of an image frame to be processed with data after wavelet transform of an image frame compressed immediately before, with one or more code blocks each of which being a minimum processing unit of the EBCOT as one detection unit; and
    performing the EBCOT on each code block that constitutes the detection unit on which movement has been detected, while skipping the EBCOT for each code block that constitutes the detection unit on which movement has not been detected and performing data supplement on the each code block by assigning data after performing EBCOT, of the image frames compressed immediately before, or index data that suggests skip operation, to the each code block that constitutes the detection unit on which movement has not been detected.

2. The moving image data compressing method according to claim 1, wherein the movement detection process performed prior to the EBCOT is performed after the wavelet transform and before the quantization, or after the quantization and before the EBCOT.

3. The moving image data compressing method according to claim 1 or 2, wherein, for a movement detection process for each of a plurality of sub-bands that are obtained by spatially dividing the image frames to be processed into a plurality of kinds of frequency bands through the wavelet transform, the movement detection process is performed on each detection unit set in one sub-band with the lowest frequency component, and
wherein a detection result identical to that of each of code blocks which constitute the detection unit is applied to each of code blocks that represents an image area identical to that of each of the code blocks that constitute the detection unit, in each of the other sub-bands.

# *Fig.1*

(a)

```
            ┌──────┐
            │  PC  │──── 120a
            └──────┘
               │
        ╱────────────────╲
       │    NETWORK       │──── 110
        ╲────────────────╱
         ╱              ╲
   ┌──────┐          ┌──────┐
   │  PC  │── 120b   │  PC  │── 120c
   └──────┘          └──────┘
```

(b)

```
                                    120(120a~120c)

            ┌──────┐
            │ CPU  │── 121
            └──────┘
  122          ▲ ▲
   │           │ │                         110
┌────────┐     │ │                          │
│ MEMORY │◄────┤ │            124       ┌ ─ ─ ─ ─ ┐
└────────┘◄────┼─┤             │        │ NETWORK │
             • │ │      ┌──────────────┐└ ─ ─ ─ ─ ┘
  123          │ ├─────►│COMMUNICATION │
   │           │ ├─────►│CONTROL DEVICE│
┌──────────┐   │ │      └──────────────┘
│PERIPHERAL│◄──┤ │        •    125
│   UNIT   │◄──┼─┤              │
└──────────┘ • │ │         ┌─────────┐
               │ ├────────►│ MONITOR │
               │ ├────────►│         │
             • │ │         └─────────┘
  130 ──┘       140
            ▼ ▼
```

## Fig.2

(a)

f1 f2          f11 f12          fn

... ——————————————————— ... ————

TIME t

(b)

fn

fn-R

| R00 | R01 | R02 | R03 | fn-G | | | | | | |
|------|------|------|------|------|------|------|------|------|------|------|
| R10 | R11 | R12 | G00 | G01 | G02 | G03 | fn-B | | | |
| R20 | R21 | R22 | G10 | G11 | G12 | B00 | B01 | B02 | B03 | |
| R30 | R31 | R32 | G20 | G21 | G22 | B10 | B11 | B12 | B13 | |
|      |      |      | G30 | G31 | G32 | B20 | B21 | B22 | B23 | |
|      |      |      |      |      |      | B30 | B31 | B32 | B33 | |

10

10

10

# Fig.3

(a)

S110
COLOR SPACE
TRANSFORM

S120
WAVELET
TRANSFORM

(A)

S130
QUANTIZATION

(A')

S140
EBCOT

(B)

S150
RATE CONTROL

(C)

S160
PACKET
GENERATION

(b)

S250
INVERSE COLOR
SPACE TRANSFORM

S240
INVERSE WAVELET
TRANSFORM

(E)

S230
INVERSE
QUANTIZATION

S220
INVERSE EBCOT

(D)

S210
PACKET ANALYSIS

# Fig.4

# Fig.5

S120

WAVELET
TRANSFORM

Ⓐ

S130

QUANTIZATION

Ⓐ'

S140 MOVED

EBCOT

Ⓑ

S310

MOVEMENT
DETECTION

NOT MOVED

100

DATA OF
PREVIOUS
FRAME AFTER
WAVELET
TRANSFORM

200

DATA OF
PREVIOUS
FRAME AFTER
ARITHMETIC
CODING

S320

DATA SUPPLEMENT

# Fig.6

(a)

(b)

EP 2 355 516 A1

# Fig.7

<table>
<tr><td colspan="2">**INTERNATIONAL SEARCH REPORT**</td><td colspan="2">International application No.<br><br>PCT/JP2009/069938</td></tr>
</table>

A. CLASSIFICATION OF SUBJECT MATTER
*H04N7/30*(2006.01)i, *H04N1/41*(2006.01)i

According to International Patent Classification (IPC) or to both national classification and IPC

B. FIELDS SEARCHED

Minimum documentation searched (classification system followed by classification symbols)
H04N7/30, H04N1/41

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2001-309381 A (Canon Inc.),<br>02 November 2001 (02.11.2001),<br>paragraphs [0029] to [0033], [0039]<br>(Family: none) | 1-3 |
| Y | JP 2004-213202 A (Ricoh Co., Ltd.),<br>29 July 2004 (29.07.2004),<br>paragraph [0076]<br>(Family: none) | 1-3 |
| Y | JP 2005-203922 A (Casio Computer Co., Ltd.),<br>28 July 2005 (28.07.2005),<br>paragraph [0050]<br>& US 2005/0151859 A1 & US 2008/0129843 A1<br>& CN 1642249 A | 1-3 |

☒ Further documents are listed in the continuation of Box C.     ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>07 January, 2010 (07.01.10) | Date of mailing of the international search report<br>19 January, 2010 (19.01.10) |
|---|---|
| Name and mailing address of the ISA/<br>Japanese Patent Office | Authorized officer |
| Facsimile No. | Telephone No. |

Form PCT/ISA/210 (second sheet) (April 2007)

**INTERNATIONAL SEARCH REPORT**

International application No.

PCT/JP2009/069938

| C (Continuation). DOCUMENTS CONSIDERED TO BE RELEVANT | | |
|---|---|---|
| Category* | Citation of document, with indication, where appropriate, of the relevant passages | Relevant to claim No. |
| Y | JP 08-172630 A (Matsushita Electric Industrial Co., Ltd.), 02 July 1996 (02.07.1996), paragraph [0025] (Family: none) | 3 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008011408 A